# EUROPÄISCHE PATENTANMELDUNG

(11) **EP 1 719 568 A1**
(43) Veröffentlichungstag der Anmeldung: **08.11.2006**
(21) Anmeldenummer: 05009631.2
(22) Anmeldetag: 03.05.2005
(51) Int. Cl.: B23D 51/10

(54) **Einspannvorrichtung für ein hin- und hergehend antreibbares Werkzeug und Werkzeuggerät**

(71) Anmelder: Metabowerke GmbH, 72622 Nürtingen (DE)
(72) Erfinder: Martin Baumann, 73728 Esslingen (DE); Jürgen Blickle, 73035 Göppingen (DE)
(74) Vertreter: Dreiss, Fuhlendorf, Steimle & Becker

(57) **Zusammenfassung**

Die Erfindung betrifft eine Vorrichtung zum Einspannen eines hin- und hergehend antreibbaren Werkzeugs (2), insbesondere eines Sägeblatts (4) bei einer Stich- oder Säbelsäge, wobei das Werkzeug (2) einen ebenen die Antriebsrichtung (18) einschließenden Flächenabschnitt (27) aufweist, mit einem hin- und hergehend antreibbaren Stößel (6), bezüglich dessen das Werkzeug fixierbar ist, und wobei ein quer zur Antriebsrichtung (18) des Werkzeugs (2) linear verschiebliches Stellelement (12) vorgesehen ist, welches das Werkzeug (2) klemmt; es wird vorgeschlagen, dass das Stellelement (12) eine zu seiner Verschieberichtung (24) geneigte Klemmfläche (26) aufweist, mit der es gegen den ebenen Flächenabschnitt (27) des Werkzeugs (2) klemmend anlegbar ist.

## Beschreibung

Die Erfindung betrifft eine Vorrichtung zum Einspannen eines hin- und hergehend antreibbaren Werkzeugs, insbesondere eines Sägeblatts bei einer Stich- oder Säbelsäge, wobei das Werkzeug einen ebenen die Antriebsrichtung einschließenden Flächenabschnitt aufweist, mit einem hin- und hergehend antreibbaren Stößel, bezüglich dessen das Werkzeug fixierbar ist, und wobei ein quer zur Antriebsrichtung des Werkzeugs linear verschiebliches Stellelement vorgesehen ist, welches das Werkzeug klemmt.

Eine derartige Vorrichtung ist bekannt aus DE 197 02 407 A1. Eine ähnliche Vorrichtung ist aus DE 102 58 862 A1 bekannt, bei der ein keilförmiges Stellelement vorgesehen ist, das mit keilförmigen Anlaufschrägen das Werkzeug quer zu dessen Antriebsrichtung untergreift, so dass es formschlüssig an einem Herausfallen gehindert ist und somit die hin- und hergehende Antriebsbewegung des Stößels mitmacht.

Der vorliegenden Erfindung liegt die Aufgabe zugrunde, eine möglichst einfach bedienbare Einspannvorrichtung zu schaffen, bei der eine verhältnismäßig geringe Betätigungskraft beim Einsetzen bzw. Entnehmen des Werkzeugs aufgewandt werden muss, wobei dennoch eine hohe Klemmkraft auf das Werkzeug in seiner bestimmungsgemäßen Montageposition am Stößel ausübbar ist.

Diese Aufgabe wird bei einer Vorrichtung der eingangs beschriebenen Art erfindungsgemäß dadurch gelöst, dass das Stellelement eine zu seiner Verschieberichtung geneigte Klemmfläche aufweist, mit der es gegen den ebenen Flächenabschnitt des Werkzeugs klemmend anlegbar ist.

Dadurch, dass die Klemmfläche des Stellelements zu der Verschieberichtung des Stellelements geneigt ist, kann eine höhere Klemmkraft auf den ebenen Flächenabschnitt des Werkzeugs ausgeübt werden als wenn, bei beim eingangs genannten Stand der Technik, die Klemmfläche senkrecht zur Verschieberichtung des Stellelements angeordnet ist.

Es erweist sich als vorteilhaft, wenn die Klemmfläche um weniger als 60° zur Verschieberichtung des Stellelements geneigt ist, insbesondere zwischen 10° und 60°, weiter insbesondere zwischen 20° und 45° und weiter insbesondere zwischen 25° und 35° zur Verschieberichtung geneigt ist.

In Weiterbildung der Erfindung erweist es sich als vorteilhaft, wenn die Klemmfläche von einer eine Öffnung in dem Stellelement begrenzenden Wandung des Stellelements gebildet ist, durch welche Öffnung sich das Werkzeug hindurcherstreckt. Das linear verschiebliche Stellelement weist also solchenfalls eine Öffnung auf, deren Öffnungsebene senkrecht zur Antriebsrichtung des Stößels und des Werkzeugs verläuft, die sich durch die Öffnung hindurcherstrecken.

Es wäre denkbar, dass die Klemmkraft des Stellelements, welche über die geneigte Klemmfläche auf den ebenen Flächenabschnitt des Werkzeugs ausgeübt wird, dadurch erreicht wird, dass eine manuell aufgebrachte Schließkraft über einen Exzenter- oder Kniehebelmechanismus erzeugt und in geeigneter Weise fixiert wird, indem beispielsweise ein Totpunkt überschritten wird. Demgegenüber erweist es sich als vorteilhaft, wenn das Stellelement in Richtung auf seine Klemmstellung federvorgespannt ist.

Vorteilhafterweise ist das Stellelement in einem an dem Stößel fixierten oder fixierbaren Gehäusekörper geführt. Solchenfalls kann in vorteilhafter Weise eine Feder zwischen dem Stellelement und dem Gehäuse abgestützt sein, und das Stellelement ist in Richtung auf seine Klemmstellung vorgespannt.

Um das linear verschiebliche Stellelement zu verschieben, insbesondere aus seiner Klemmstellung zu lösen, um ein eingespanntes Werkzeug entnehmen zu können, ist ein manuell zu betätigendes Bedienmittel für das Stellelement vorgesehen. Hierbei kann es sich im einfachsten Fall um eine tasterartige Drückerfläche handeln oder um eine beliebige manuelle Angriffsfläche zum Ausüben einer Stellkraft auf das Stellelement. Es kann sich auch als vorteilhaft erweisen, wenn an dem Gehäusekörper ein manuell zu betätigender Bedienhebel für das Stellelement vorgesehen ist, der auf das Stellelement einwirkt. Vorzugsweise ist die Bewegungsebene des Bedienhebels dann senkrecht zur Antriebsrichtung des Werkzeugs ausgerichtet.

Der Bedienhebel kann in vorteilhafter Weise schwenkbar am Gehäusekörper angelenkt sein und kulissenartig mit dem längsverschieblichen Stellelement in Antriebskopplung stehen.

Nach einem von der erfindungsgemäßen Ausbildung des Stellelements an sich unabhängigen und selbständigen Erfindungsgedanken ist zusätzlich zu dem Stellelement, welches eine Klemmkraft auf den Flächenabschnitt des Werkzeugs aufweist, ein Mittel vorgesehen, welches das Werkzeug in seiner bestimmungsgemäßen Einspannposition quer zur Antriebsrichtung des Werkzeugs hintergreift, um so zusätzlich einen Formschluss des Werkzeugs in seiner Einspannposition zu erreichen. Für die nachfolgenden bevorzugten Merkmale wird ebenfalls selbständig Schutz in Anspruch genommen.

In Weiterbildung dieses Gedankens ist das Mittel um eine mit der Antriebsrichtung des Werkzeugs fluchtende Achse drehbar angeordnet. Es ist insbesondere drehbar in dem Gehäusekörper gelagert und geführt.

Nach einem weiteren Erfindungsgedanken von besonderer Bedeutung sind das Mittel und das Stellelement durch eine einzige manuelle Betätigung bedienbar. (Siehe auch Anspruch 27).

In vorteilhafter Weise ist das Mittel mit dem Stellelement derart gekoppelt, dass die Drehstellung des Mittels mit der Verschiebestellung des Stellelements korreliert ist. Dies könnte in an sich beliebiger Weise erreicht sein, wobei in vorteilhafter Weise das Mittel mit dem Stellelement über eine Verzahnung gekoppelt ist.

Es erweist sich des Weiteren als vorteilhaft, wenn die Verzahnung in einer eine Öffnung in dem Stellelement begrenzenden Wandung des Stellelements ausgebildet ist, und dass sich das Mittel mit einer Gegenverzahnung in diese Öffnung hineinerstreckt. Auf diese Weise wird eine lineare Stellbewegung des Stellelements in eine Drehbewegung des genannten Mittels umgesetzt, wodurch das Werkzeug einerseits über das Stellelement geklemmt und andererseits über das Mittel formschlüssig quer zur Antriebsrichtung des Stößels fixiert wird.

Im Hinblick auf eine definierte Führung ist es zwar nicht erforderlich, jedoch vorteilhaft, wenn das Mittel ring- oder hülsenförmig ausgebildet ist und dabei radial außen von dem Gehäuse und radial innen wenigstens über einen Umfangsabschnitt von dem Stößel geführt ist.

Weitere Merkmale, Einzelheiten und Vorteile der Erfindung ergeben sich aus den beigefügten Patentansprüchen und aus der zeichnerischen Darstellung und nachfolgenden Beschreibung bevorzugter Ausführungsformen der erfindungsgemäßen Vorrichtung. In der Zeichnung zeigt:
Figuren
   - 1 bis 8: verschiedene Ansichten und Teilansichten einer ersten Ausführungsform einer erfindungsgemäßen Vorrichtung;
   - 9 bis 14: verschiedene Ansichten und Teilansichten einer zweiten Ausführungsform einer erfindungsgemäßen Vorrichtung.

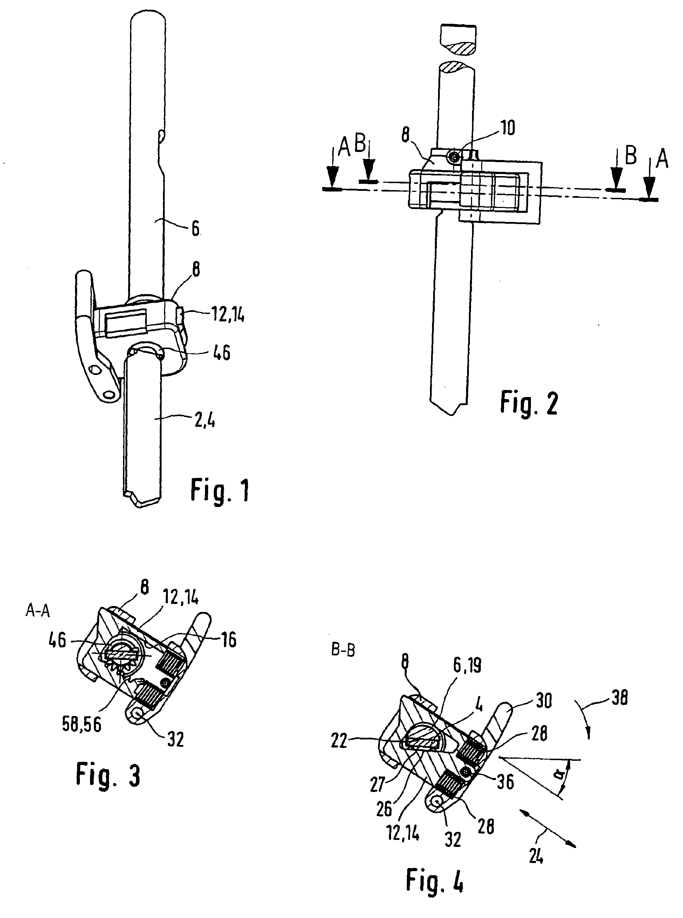

Die Figuren 1 bis 8 zeigen verschiedene Ansichten und

Teilansichten einer ersten Ausführungsform einer erfindungsgemäßen Vorrichtung zum Einspannen eines hin- und hergehend antreibbaren Werkzeugs 2 in Form eines Sägeblatts 4 einer nicht dargestellten Stichsäge.

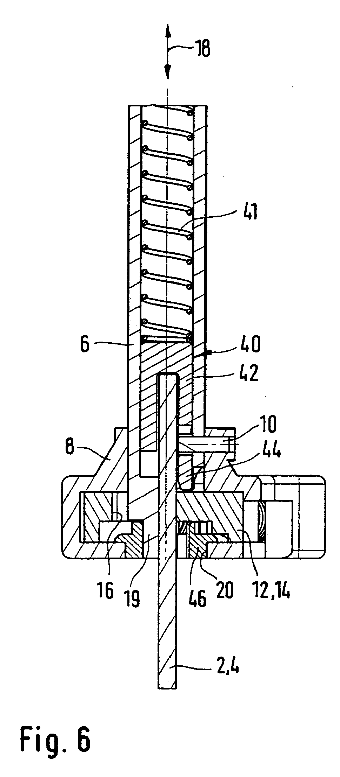

Die Vorrichtung umfasst einen hin- und hergehend antreibbaren Stößel 6, bezüglich dessen das Sägeblatt 4 auf noch im Einzelnen zu beschreibende Weise fixierbar ist. Hierfür ist ein Gehäuse 8 vorgesehen, welches, wie aus Figuren 2 und 6 ersichtlich, über einen Stift 10 an dem Stößel 6 festgelegt ist. Das Gehäuse 8 bildet zugleich eine Aufnahme für ein darin linear verschiebliches Stellelement 12, das auch als Schieber 14 bezeichnet werden kann. Das Stellelement 12 weist eine im dargestellten Fall geschlossene Öffnung 16 auf, deren Öffnungsebene senkrecht zur Antriebsrichtung 18 des Stößels 6 angeordnet ist, wobei sich der Stößel 6 mit einem Endabschnitt 19 durch die Öffnung 16 des Stellelements 12 hindurcherstreckt. Auch das Gehäuse 8 weist eine Einstecköffnung 20 auf, durch die das Sägeblatt 4 in das Gehäuse 8 und das Innere des Stößels 6 eingesteckt werden kann, wenn sich das Stellelement 12 in Lösestellung befindet.

Figur 4 zeigt den erwähnten Endabschnitt 19 des Stößels 6, mit dem sich dieser in die Öffnung 16 des Stellelements 12 hineinerstreckt. Dieser Endabschnitt bildet eine Anlagefläche 22 für das Sägeblatt 4. Des Weiteren erkennt man aus Figur 4 eine zur Verschieberichtung 24 des Stellelements 12 in einem Winkel α geneigte Klemmfläche 26 des Stellelements 12. Dadurch, dass die Klemmfläche 26 nicht senkrecht zu der Verschieberichtung 24 verläuft, sondern einen Winkel α von vorzugsweise 20° bis 45° hierzu bildet, kann eine sehr große Klemmkraft auf dem ebenen Flächenabschnitt 27 des Sägeblatts 4 ausgeübt werden, wenn das Stellelement 12 in seine Klemmstellung bewegt wird.

Dies geschieht im dargestellten Fall durch die Wirkung zweier Druckfedern 28, welche sich zwischen dem Stellelement 12 und dem Gehäuse 8 abstützen.

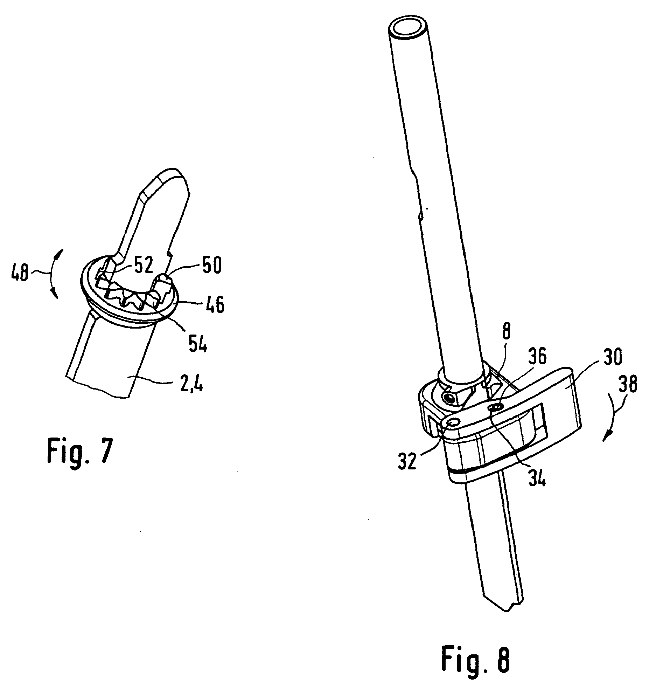

Zur Betätigung des Stellelements 12 ist ein Bedienhebel 30 vorgesehen, der an einem Schwenkpunkt 32 an dem Gehäuse 8 schwenkbar gelagert ist. Wie aus Figur 8 ersichtlich ist, weist der Bedienhebel 30 ein nach Art einer Kulisse wirkendes Langloch 34 auf, in welches ein Stift 36 des Stellelements 12 eingreift. Bei Schwenken des Bedienhebels 30 in Richtung des Pfeils 38 wird das Stellelement 12 in Lösestellung bewegt und die Klemmfläche 26 wird von dem ebenen Flächenabschnitt 27 des Sägeblatts 4 abgehoben und gibt somit das Sägeblatt 4 frei. Wird der Bedienhebel 30 losgelassen, so wird das Stellelement 12 und damit der Bedienhebel 30 durch die Wirkung der Druckfedern 28 wieder in Klemmstellung gezwungen.

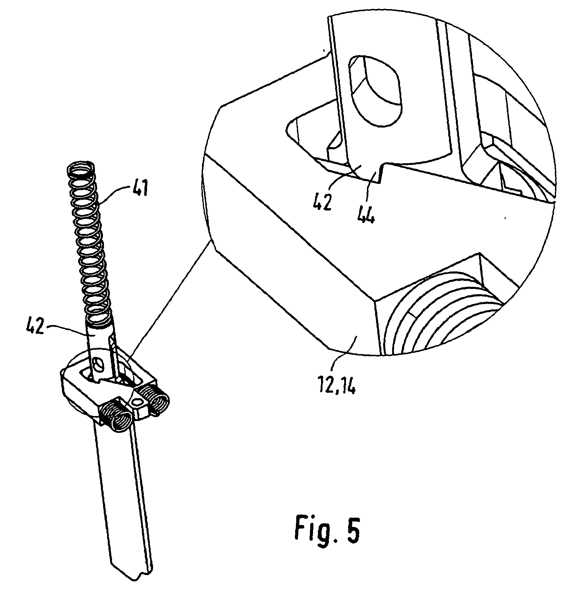

Aus Figuren 5 und 6 ist ein Offenhaltemechanismus ersichtlich, vermittels dessen das Stellelement 12 in Lösestellung gehalten werden kann, wenn kein Sägeblatt eingesteckt ist. Dieser Offenhaltemechanismus ist durch eine Arretiereinrichtung 40 gebildet, die im Inneren des hohlen Stößels 6 eine Druckfeder 41 und ein kolbenartiges Arretiermittel 42 umfasst. Das Arretiermittel 42 ist geschlitzt und gestattet das Einschieben des Sägeblatts 4. Ist kein Sägeblatt in die Vorrichtung eingesteckt, so versucht die Druckfeder 41 das kolbenartige Arretiermittel 42 in der Figur 6 nach unten zu drücken. Es umfasst einen Arretiervorsprung 44 an seinem Ende, welcher im ausgefahrenen Zustand in den Bewegungsweg des Stellelements 12 eingreift, so wie dies in Figur 6 und der Detaildarstellung von Figur 5 dargestellt ist. Wird das Stellelement 12 in seine Lösestellung bewegt, so schnappt das kolbenartige Arretiermittel 42 nach unten und dessen Arretiervorsprung 44 gelangt in den Bewegungsweg des Stellelements 12. Das Stellelement 12 kann dann nicht weiter in Klemmstellung bewegt werden. Es braucht also nicht dauernd in Löse- oder Freigabestellung offengehalten zu werden. Ein Benutzer kann sich in bedienungsfreundlicher Weise auf das Einstecken des Sägeblatts 4 durch die Einstecköffnung 20 konzentrieren. Sobald das Sägeblatt in die schlitzförmige Ausnehmung des kolbenartigen Arretiermittels 42 eingreift und dieses gegen den leichten Druck der Druckfeder 41 geringfügig nach oben bewegt, kommt der Arretiervorsprung 44 aus der soeben beschriebenen Blockierstellung frei und das Stellelement 12 kann unter der Wirkung der Druckfedern 28 in Klemmstellung bewegt werden, in der das Sägeblatt 4 zwischen Anlagefläche 22 des Stößels 6 und Klemmfläche 26 des Stellelements 12 geklemmt ist.

Zusätzlich zu der Klemmung des Flächenabschnitts 27 des Sägeblatts 4 ist ein aus Figuren 3 und 7 ersichtliches ring- oder hülsenförmiges Mittel 46 vorgesehen, welches das Sägeblatt 4 in seiner bestimmungsgemäßen Einspann- oder Montageposition quer zur Antriebsrichtung 18 hintergreift, so dass das Sägeblatt 4 in axialer Antriebsrichtung 18 formschlüssig mit dem Stößel 6 gekoppelt ist.

Das hülsenförmige Mittel 46 ist um eine mit der Antriebsrichtung 18 fluchtende Achse drehbar, was durch den Doppelpfeil 48 angedeutet ist. Es ist einerseits durch den Endabschnitt 19 des Stößels 6 und andererseits durch das Gehäuse 8 umdrehbar geführt. Das Mittel 46 umfasst einen emporstehenden und in Umfangsrichtung erstreckten Wandbereich 50, der in eine Hintergriffsstellung mit dem Sägeblatt 4 drehbar ist. Man erkennt aus Figur 7, dass das Mittel 46 einen entsprechend der Sägeblattbreite in einem oberen Einsteckabschnitt gestalteten Durchsteckschlitz 52 aufweist. Auf Höhe des Wandbereichs 50 des Mittels 46 ist das Sägeblatt aber in der Breite verjüngt und weist eine gestufte Ausnehmung auf, so dass das Mittel 46 im eingesteckten Zustand des Sägeblatts 4 in Richtung des Doppelpfeils 48 verdrehbar ist und so der Wandbereich 50 in diesen verjüngten Bereich des Sägeblatts 4 hineingedreht werden kann, um einen axialen Formschluss mit dem Sägeblatt 4 auszubilden.

Das Mittel 46 ist über eine Verzahnung 54, die nach Art eines Zahnrads ausgebildet ist, mit einer Verzahnung 56, die als gerade Zahnstange 58 an der Innenseite der Öffnung 16 des Stellelements 12 ausgebildet ist, gekoppelt. Eine Verschiebung des Stellelements 12 geht somit mit einer Drehung des hülsenförmigen Mittels 46 einher. Wird das Stellelement 12 in Klemmstellung bewegt, so wird das Mittel 46 in die verriegelnde Hintergriffsstellung bewegt. Ein Lösen des Stellelements 12 bewirkt eine Rückdrehung des Mittels 46 und somit eine Freigabe der Hintergriffsstellung, so dass das Sägeblatt aus der Vorrichtung entnommen werden kann.

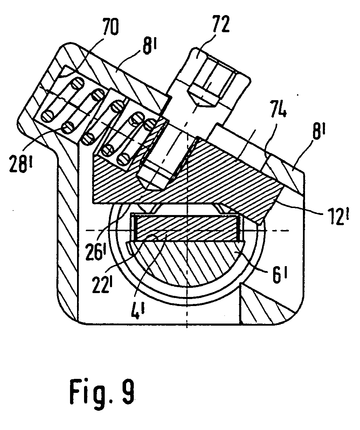

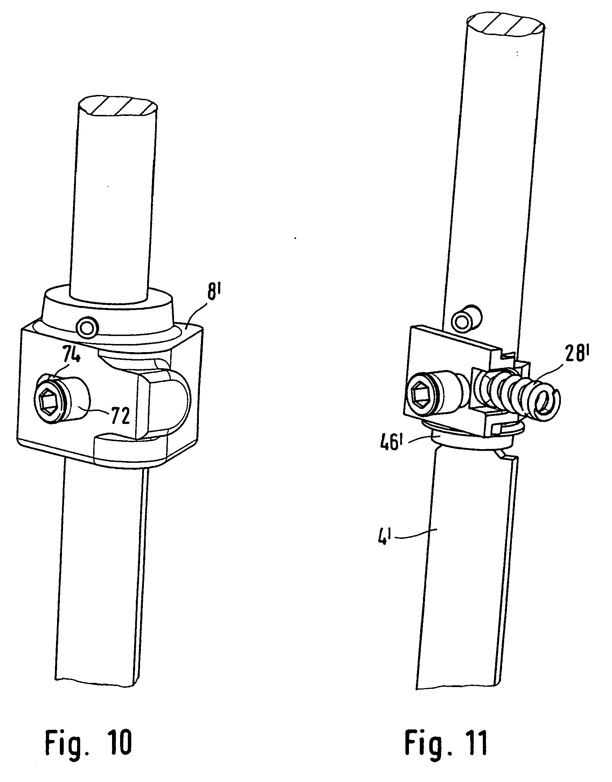

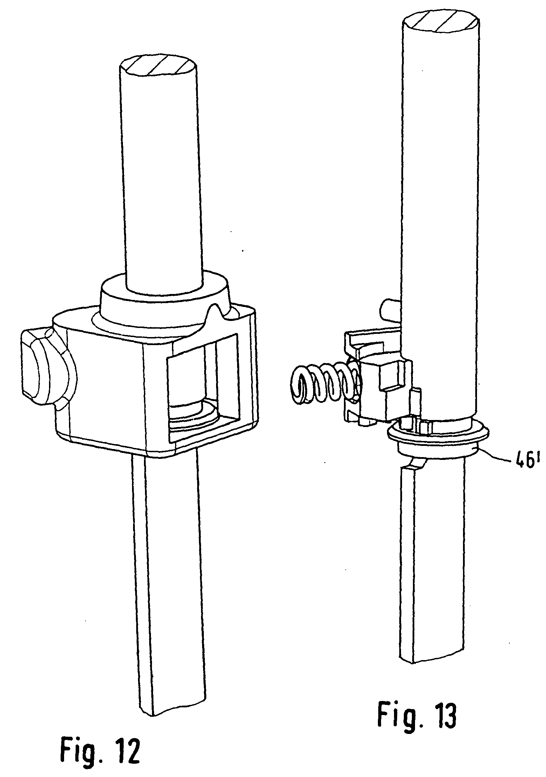

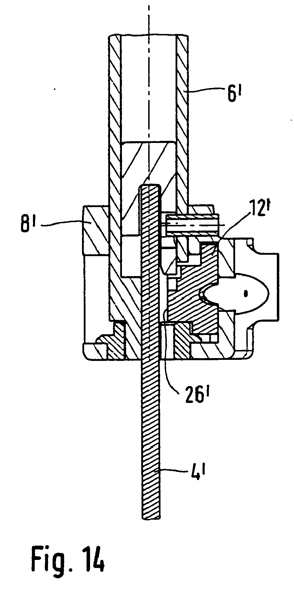

Figuren 9 bis 14 zeigen eine weitere Ausführungsform der erfindungsgemäßen Vorrichtung und deren Komponenten, bei der zwischen dem Stellelement 12' und dem Gehäuse 8' nur eine einzige Druckfeder 28' vorgesehen ist, die sich in einem topfförmigen Abschnitt 70 des Gehäuses 8' einerseits und gegen das Stellelement 12' andererseits abstützt. Als Bedienmittel für das Stellelement 12' ist eine in das Stellelement 12 eingedrehte Schraube 72 vorgesehen, die sich durch eine langlochförmige Öffnung 74 in dem Gehäuse 8' nach außen erstreckt. Wiederum wird ein Sägeblatt 4' über eine schräg zur Verschieberichtung des Stellelements 12 orientierte Klemmfläche 26' gegen eine Anlagefläche 22' des Stößels 6' geklemmt. Aus den Figuren 11 und 13 ist das Mittel 46' zur Herbeiführung eines axialen Hintergriffs mit dem Sägeblatt 4' ersichtlich.

## Patentansprüche

1. Vorrichtung zum Einspannen eines hin- und hergehend antreibbaren Werkzeugs (2), insbesondere eines Sägeblatts (4) bei einer Stich- oder Säbelsäge, wobei das Werkzeug (2) einen ebenen die Antriebsrichtung (18) einschließenden Flächenabschnitt (27) aufweist, mit einem hin- und hergehend antreibbaren Stößel (6), bezüglich dessen das Werkzeug (2) fixierbar ist, und wobei ein quer zur Antriebsrichtung (18) des Werkzeugs (2) linear verschiebliches Stellelement (12) vorgesehen ist, welches das Werkzeug (2) klemmt, **dadurch gekennzeichnet, dass** das Stellelement (12) eine zu seiner Verschieberichtung (24) geneigte Klemmfläche (26) aufweist, mit der es gegen den ebenen Flächenabschnitt (27) des Werkzeugs (2) klemmend anlegbar ist.

2. Vorrichtung nach Anspruch 1, **dadurch gekennzeichnet, dass** die Klemmfläche (26) Zwischen 10° und 60°, insbesondere zwischen 20° und 45°, insbesondere zwischen 25° und 35° zur Verschieberichtung (24) geneigt ist.

3. Vorrichtung nach Anspruch 1 oder 2, **dadurch gekennzeichnet, dass** die Klemmfläche (26) von einer eine Öffnung (16) in dem Stellelement (12) begrenzenden Wandung des Stellelements gebildet ist, durch welche Öffnung (16) sich das Werkzeug hindurcherstreckt.

4. Vorrichtung nach Anspruch 1, 2 oder 3, **dadurch gekennzeichnet, dass** das Stellelement (12) in Richtung auf seine Klemmstellung federvorgespannt ist.

5. Vorrichtung nach einem oder mehreren der vorstehenden Ansprüche, **dadurch gekennzeichnet, dass** das Stellelement (12) in einem an dem Stößel (6) fixierten Gehäusekörper (8) geführt ist.

6. Vorrichtung nach Anspruch 5, **dadurch gekennzeichnet, dass** eine Feder (28) zwischen dem Stellelement (12) und dem Gehäusekörper (8) abgestützt ist und das Stellelement (12) in Richtung auf seine Klemmstellung vorgespannt ist.

7. Vorrichtung nach einem oder mehreren der vorstehenden Ansprüche, **dadurch gekennzeichnet, dass** ein manuell zu betätigendes Bedienmittel für das Stellelement (12) vorgesehen ist.

8. Vorrichtung nach Anspruch 7, **dadurch gekennzeichnet, dass** ein manuell zu betätigender Bedienhebel (30) für das Stellelement (12) vorgesehen ist.

9. Vorrichtung nach Anspruch 8, **dadurch gekennzeichnet, dass** der Bedienhebel (30) am Gehäusekörper (8) schwenkbar angelenkt ist und kulissenartig mit dem längsverschieblichen Stellelement (12) in Antriebskopplung steht.

10. Vorrichtung nach einem oder mehreren der vorstehenden Ansprüche, **dadurch gekennzeichnet, dass** zusätzlich ein Mittel (46) vorgesehen ist, welches das Werkzeug (2) in seiner bestimmungsgemäßen Einspannposition quer zur Antriebsrichtung (18) des Werkzeugs hintergreift.

11. Vorrichtung nach Anspruch 10, **dadurch gekennzeichnet, dass** das Mittel (46) um eine mit der Antriebsrichtung (18) des Werkzeugs fluchtende Achse drehbar ist.

12. Vorrichtung nach Anspruch 10 oder 11, **dadurch gekennzeichnet, dass** das Mittel (46) drehbar in dem Gehäusekörper (8) gelagert ist.

13. Vorrichtung nach Anspruch 10, 11 oder 12, **dadurch gekennzeichnet, dass** das Mittel (46) und das Stellelement (12) durch eine einzige manuelle Betätigung bedienbar sind.

14. Vorrichtung nach einem der Ansprüche 10 - 13, **dadurch gekennzeichnet, dass** das Mittel (46) mit dem Stellelement (12) derart gekoppelt ist, dass die Drehstellung des Mittels (46) mit der Verschiebestellung des Stellelements (12) korreliert ist.

15. Vorrichtung nach Anspruch 14, **dadurch gekennzeichnet, dass** das Mittel (46) mit dem Stellelement (12) über eine Verzahnung (54, 56, 58) gekoppelt ist.

16. Vorrichtung nach Anspruch 15, **dadurch gekennzeichnet, dass** die Verzahnung (56, 58) in einer eine Öffnung (16) in dem Stellelement (12) begrenzenden Wandung des Stellelements ausgebildet ist, und dass sich das Mittel mit einer Verzahnung (54) in diese Öffnung hineinerstreckt.

17. Vorrichtung nach einem der Ansprüche 10 - 16, **dadurch gekennzeichnet, dass** das Mittel (46) ring- oder hülsenförmig ausgebildet ist.

18. Vorrichtung nach einem oder mehreren der vorstehenden Ansprüche, **dadurch gekennzeichnet, dass** das Stellelement (12) in einer Freigabestellung für das Werkzeug (2) selbsttätig arretierbar ist, sobald das Werkzeug (2) aus seiner Montageposition entnommen ist.

19. Vorrichtung nach Anspruch 18, **dadurch gekennzeichnet, dass** das Stellelement (12) solange in der Freigabestellung arretiert bleibt, bis ein Werkzeug (2) in die Montageposition gebracht ist.

20. Vorrichtung nach Anspruch 18 oder 19, **dadurch gekennzeichnet, dass** ein Arretiermittel (42) vorgesehen ist, welches selbsttätig in den Stellweg des Stellelements (12) einrückt, sobald das Werkzeug (2) aus seiner Montageposition entnommen ist.

21. Vorrichtung nach Anspruch 18, 19 oder 20, **dadurch gekennzeichnet, dass** das Werkzeug beim Verbringen in die Montageposition gegen das Arretiermittel (42) anläuft und dieses in Freigaberichtung verdrängt.

22. Vorrichtung nach einem der Ansprüche 18 - 21, **dadurch gekennzeichnet, dass** eine Arretiereinrichtung (40) zum Fixieren des Stellelements (12) in der Freigabestellung innerhalb des Stößels (6) oder an dem Stößel (6) vorgesehen ist.

23. Vorrichtung nach Anspruch 22, **dadurch gekennzeichnet, dass** die Arretiereinrichtung (40) ein im Stößel (6) oder am Stößel verschiebliches Betätigungsmittel umfasst.

24. Vorrichtung nach Anspruch 23, **dadurch gekennzeichnet, dass** das Betätigungsmittel in Antriebsrichtung (18) des Stößels (6) verschieblich ist.

25. Vorrichtung nach Anspruch 24, **dadurch gekennzeichnet, dass** das Betätigungsmittel unter Federvorspannung steht.

26. Vorrichtung nach Anspruch 23, 24 oder 25, **dadurch gekennzeichnet, dass** das Betätigungsmittel zugleich ein Arretiermittel (42) bildet, welches selbsttätig in den Stellweg des Stellelements (12) einrückt, sobald das Werkzeug (2) aus seiner Montageposition entnommen ist.

27. Vorrichtung nach dem Oberbegriff des Anspruchs 1, **dadurch gekennzeichnet, dass** ein drehbar gelagertes Mittel (46) vorgesehen ist, welches das Werkzeug (2) in seiner bestimmungsgemäßen Einspannposition quer zur Antriebsrichtung (18) des Werkzeugs hintergreift, und dass das Mittel (46) und das Stellelement (12) durch eine einzige manuelle Betätigung des Stellelements (12) bedienbar sind.

28. Werkzeuggerät, insbesondere Handwerkzeuggerät, **gekennzeichnet durch** eine Vorrichtung nach einem oder mehreren der vorstehenden Ansprüche.
